# EUROPEAN PATENT APPLICATION

(11) **EP 3 492 790 A1**
(43) Date of publication of application: **05.06.2019**
(21) Application number: 17205086.6
(22) Date of filing: 04.12.2017
(51) Int. Cl.: F16K 51/02, F16K 3/02, F16K 3/18

(54) **SPRING FREE GATE VALVE**

(71) Applicant: King Lai Hygienic Materials Co., Ltd., 30264 Zhubei City, Hsinchu County (TW)
(72) Inventor: YANG, Li-Chung, 30264 Zhubei City, Hsinchu County (TW)
(74) Representative: Patentwerk B.V.

(57) **Abstract**

A spring free gate valve including a power source (10) connected with a shaft (11); a valve body (20) having the power source (10) at one end thereof with the shaft (11) inserted into the valve body (20), wherein the valve body has a valve bore (231), with two lateral sides therein provided with a guide rail (26), respectively; a drive member (31) connected with the shaft (11) and driving two guide portions (33) of a valve plate (32) to move along the guide rails (26). When the guide portions (33) move to one end of the guide rails (26), the valve plate (32) is fixed and in alignment with the valve bore (231). The drive member (31) continues to move along with a trip of the shaft (11), and the valve plate (32) is driven to move along a radial direction of the shaft (11) to seal the valve bore (231). Therefore, abnormal operation caused by resiliency fatigue of spring is resolved.

## Description

### Background of the invention

### Field of the invention

The present invention relates to gate valves, and more particularly, to a spring-free gate valve which is allowed to retrieve or expand the valve plate without the use of a spring.

### Description of the related art

A gate valve is extensively applied in various industries, such as science and technology industry, commodity industry, or traditional manufacturing industry. Relative applications include gate valves for vacuum environment, liquid delivery, or material delivery. Therefore, a gate valve is widely applied and necessary.

A conventional gate valve structure includes a valve body and a gate plate assembly. A driving shaft of a power source passes through one end of the valve body, and the valve body is provided with a valve bore. The gate plate assembly is disposed in the valve body and provided with a valve plate and a spring disposed in the valve plate. When the valve bore is to be closed, the driving shaft of the power source drives the gate plate assembly to move toward the valve bore. When the valve plate is in alignment with the valve bore, the resilient member expands the valve plate outward to seal the valve bore. On the other hand, when the valve bore is to be opened, the resilient member folds the valve plate inward, and the driving shaft moves the gate plate assembly away from the valve bore.

However, after a long period of usage, the resiliency fatigue of the resilient member easily occurs, causing an abnormal operation of the valve. As a result, the valve body shall be disassembled to replace the resilient member. An improvement of such inconvenience is desirable.

### Summary of the invention

For improving the issues above, an embodiment of the present invention discloses a spring free gate valve. With a guide rail disposed at two lateral sides within the valve body, respectively, when the drive member drives the two guide portions of the valve plate to move along the two guide rails to be positioned, the valve plate is in alignment with the valve bore, and the power source keeps operating, such that the two guide portions radially move against the shaft along the two guide rails. As a result, the valve plate is expanded outward to seal the valve bore. Therefore, without the usage of spring, abnormal operation caused by resiliency fatigue of the spring is resolved.

For achieving the aforementioned objectives, a spring free gate valve in accordance with an embodiment of the present invention is provided, comprising:
a power source provided with a shaft capable of axially moving;
a hollow valve body, the power source disposed at one end of the valve body with the shaft inserted into the valve body, the valve body having one lateral face provided with a valve bore, two lateral sides within the valve body provided with a guide rail, respectively;
a drive member movably disposed in the valve body and connected with an end of the shaft; and
a valve plate disposed at the drive member, the valve plate having two lateral sides provided with a guide portion, respectively, the two guide portions slidably disposed at the two guide rails, the drive member driving the two guide portions of the valve plate to move along the guide rails; when the two guide portions move to one end of the two guide rails, the valve plate is fixed and in alignment with the valve bore, and the drive member continues to move along with a trip of the shaft, such that the valve plate is driven to move along a radial direction of the shaft to seal the valve bore.

In an embodiment of the present invention, the drive member is movably provided with a plurality of contact wheels. The valve plate is provided with a plurality of corresponding drive grooves concavely disposed at the places contacting with the contact wheels. The contact wheels slide to the shallow section of the drive groove, whereby the valve plate radially moves against the shaft.

With the guide rails disposed at two lateral sides within the valve body, when the gate plate assembly moves to one end of the valve body, the two guide portions connected with the valve plate move from the movement portions along the guide rails to the positioning portions, such that the valve plate is fixed to be in alignment with the valve bore. Subsequently, the drive member continues to move along with the trip of the shaft, such that the valve plate is driven to radially move against the shaft, causing the contact wheels to slide to the shallow section of the drive groove. As a result, the valve plate is expanded outward to seal the valve bore. Therefore, the guide rails provide a guiding function during the movement of the gate plate assembly. Also, with the depth difference between the movement portion and the positioning portion, the valve plate is in alignment with the valve bore and pushed outward to seal the valve bore through the cooperation of the contact wheels and the drive grooves, such that the valve bore is completely sealed. On the other hand, the depth difference between the guide rails and the drive grooves also facilitates the inward folding of the valve plate, whereby the valve bore is once again opened. Therefore, without the usage of spring, abnormal operation caused by resiliency fatigue of the spring is resolved.

### Brief description of the drawings

Fig. 1 is a perspective view of the spring free gate valve in accordance with an embodiment of the present invention.
Fig. 2 is an exploded view of the spring free gate valve in accordance with an embodiment of the present invention.
Fig. 3 is a sectional view of the spring free gate valve, illustrating the relationship between the connection assembly and the adjust member.
Fig. 4 is a schematic view of the spring free gate valve with the side board removed, illustrating the gate plate assembly at the initial position, with the valve bore not sealed by the valve plate.
Fig. 5 is another sectional view of the spring free gate valve, illustrating the contact wheel slidably disposed in the drive groove, with the valve bore not sealed by the valve plate.
Fig. 6 is another sectional view of the spring free gate valve, illustrating the support wheel slidably disposed between the valve plate and the valve body, with the valve bore not sealed by the valve plate.
Fig. 7 is another sectional view of the spring free gate valve, illustrating the guide portion slidably disposed in the guide rail.
Fig. 8 is another schematic view of the spring free gate valve with the side board removed, illustrating the gate plate assembly at the sealing position, with the valve plate sealing the valve bore.
Fig. 9 is another sectional view of the spring free gate valve, illustrating the contact wheel slidably disposed in the drive groove, with the valve plate sealing the valve bore.
Fig. 10 is another sectional view of the spring free gate valve, illustrating the support wheel slidably disposed between the valve plate and the valve body, with the valve plate sealing the valve bore.
Fig. 11 is a perspective view of the spring free gate valve in accordance with another embodiment of the present invention.
Fig. 12 is an exploded view of the spring free gate valve in accordance with another embodiment of the present invention.
Fig. 13 is a sectional view of the spring free gate valve in accordance with another embodiment of the present invention, illustrating the relationship of the connection assembly and the adjust member.
Fig. 14 is another sectional view of the spring free gate valve in accordance with another embodiment of the present invention, illustrating the valve plate sealing the valve bore.

### Detailed description of the invention

The aforementioned and further advantages and features of the present invention will be understood by reference to the description of the preferred embodiment in conjunction with the accompanying drawings where the components are illustrated based on a proportion for explanation but not subject to the actual component proportion.

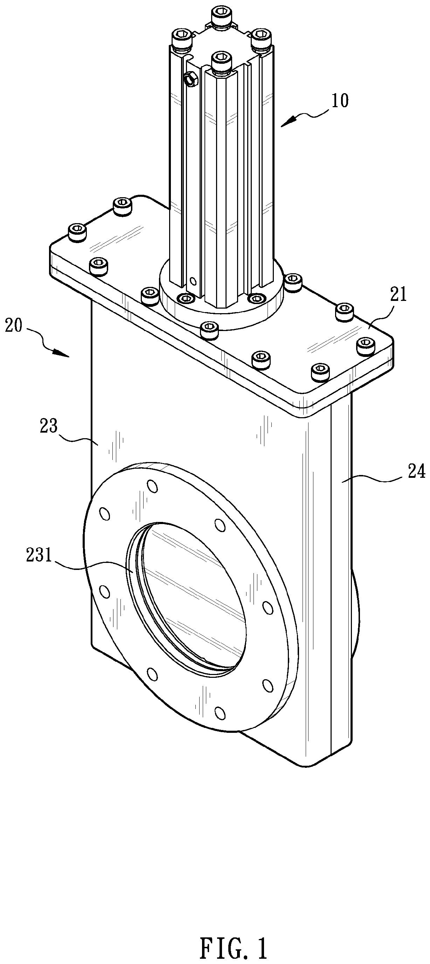

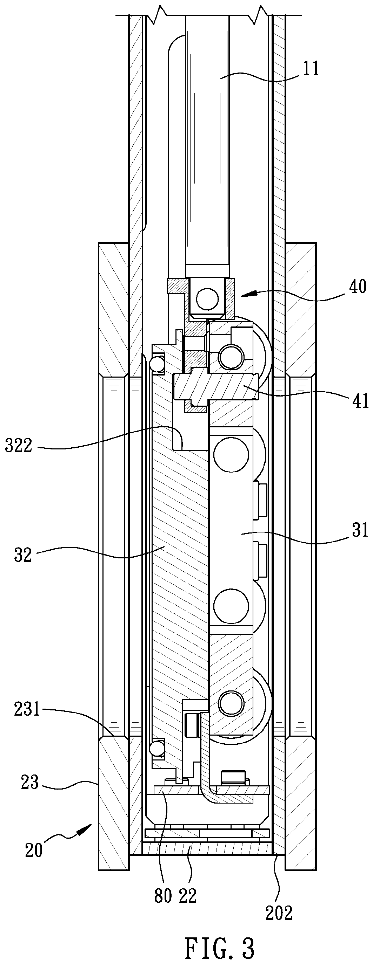

Referring to Fig. 1 to Fig. 10, a spring free gate valve in accordance with an embodiment of the present invention is provided, comprising a power source 10, a valve body 20, and a gate plate assembly 30.

The power source 10 includes a shaft 11 which is able to axially move. The power source 10 is allowed to be a pneumatic cylinder, a hydraulic cylinder, or a manual cylinder.

The valve body 20 is hollow. In an embodiment of the present invention, the valve body 20 is formed in a rectangular shape. The valve body 20 includes a first end 201 and a second end 202 disposed in opposite to the first end 201. Also, the valve body 20 comprises a fix seat 21, a bottom board 22, two side boards 23, and two lateral boards 24 disposed in vertical to the two side boards 23, wherein the valve body 20 is formed by the manner of welding. The fix seat 21 is disposed at the first end 201 of the valve body 20, such that the power source 10 is able to be disposed thereon, and the shaft 11 is allowed to be inserted therethrough into the valve body 20. The bottom board 22 is disposed at the second end 202 of the valve body 20.

The side board 23 has a valve bore 231 passing therethrough. Each of the two lateral boards 24 is provided with a guide seat 25 disposed inside the valve body, respectively, with a guide rail 26 is disposed on the guide seat 25. In an embodiment of the present invention, the guide seat 25 is welded on the inner side of the lateral board 24.

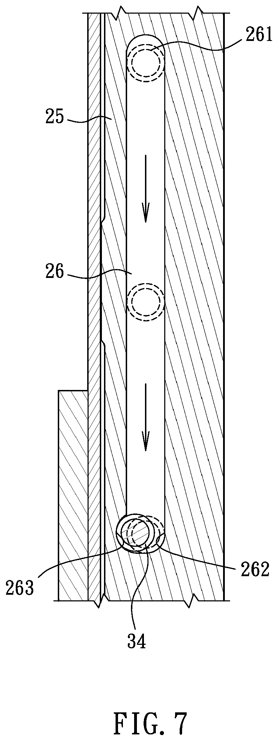

The guide rail 26 is disposed along the driving direction of the shaft 11. The top end of the guide rail 26 is provided with a movement portion 261. The distal end of the guide rail 26 is provided with a positioning portion 262 and a sealing portion 263 connected with the positioning portion 262. In an embodiment of the present invention, the movement portion 261 is formed in a straight shape and disposed in parallel to the axial direction of the shaft 11. The positioning portion 262 and the sealing portion 263 are formed in an arc shape. The width of the movement portion 261 differs from the width of the positioning portion 262, wherein a straight line defined by the central point of the positioning portion 262 and the central point of the sealing portion 263 is vertical to a straight line defined by the central point of the positioning portion 262 and the central point of the movement portion 261, as shown by Fig. 7.

The gate plate assembly 30 is movably disposed in the valve body 20. Also, the gate plate assembly 30 includes a drive member 31 connected with an end of the shaft 11, and a valve plate 32 disposed on the drive member 31. The drive member 31 mainly comprises four sides and is generally formed in a rectangular shape. In an embodiment of the present invention, the drive member 31 comprises two first sides 311 facing the guide rails 26 and two second sides 312 disposed in vertical to the two first sides 311, wherein one of the second sides 312 faces the first end 201 of the valve body 20, and the other second side 312 faces the second end 202 of the valve body 20. The shaft 11, the drive member 31, and the valve plate 32 are fastened by a connection assembly 40. The drive member 31 moves along with the trip of the shaft 11, so as to drive the valve plate 32 to move inside the valve body 20. Further, the gate plate assembly 30 has a guide portion 33 disposed at two sides of the valve plate 32, respectively, wherein the two guide portions 33 are movably disposed in the two guide rails 26. The guide portion 33 is allowed to be a sliding block, a roller, or a bearing. In an embodiment of the present invention, each guide portion 33 is disposed at a combine seat 34, and the two combine seats 34 corresponding to the two guide rails 26 are disposed at two sides of the valve plate 32. Also, the guide portions 33 are a bearing.

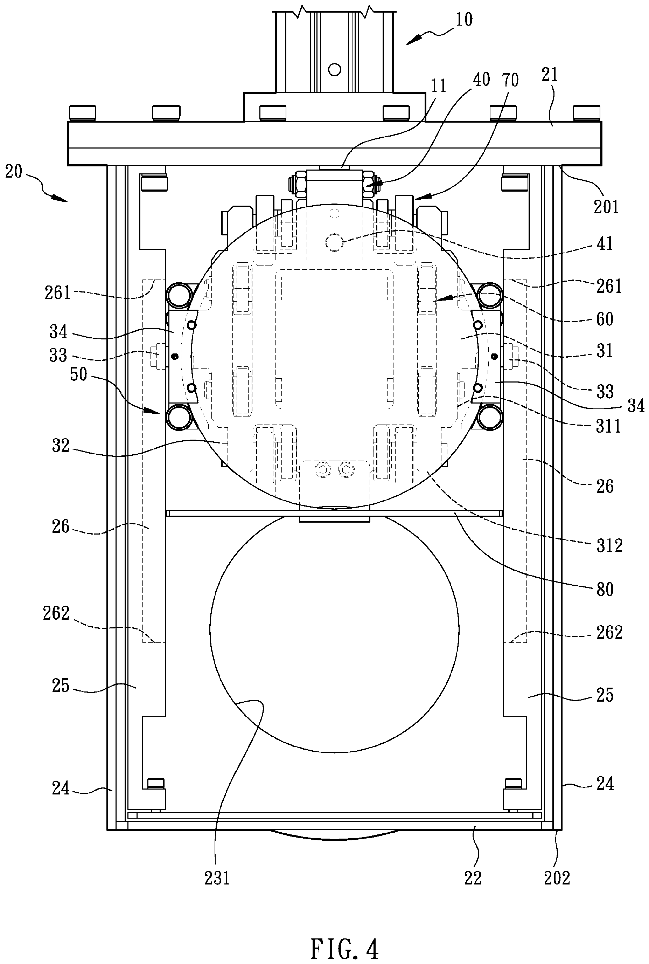

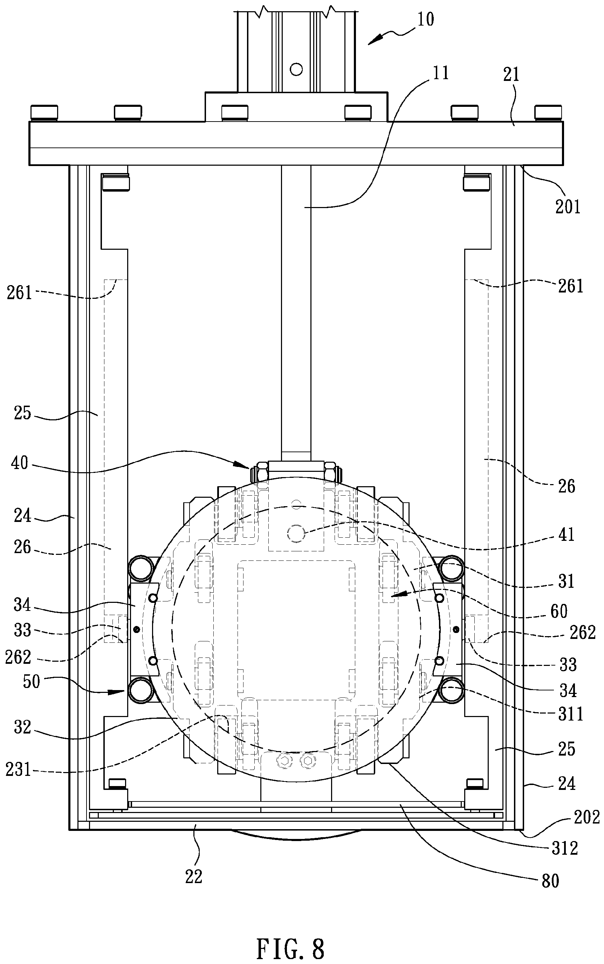

The shaft 11 is applied for driving the gate plate assembly 30 to reciprocate among an initial position, a positioning position, and a sealing position, wherein the initial position is adjacent to the first end 201 of the valve body 20, while the positioning position and the sealing position are adjacent to the second end 202 of the valve body 20. When the two guide portions 33 are at the movement portion 261 and adjacent to the first end 201, the guide portions 33 are at the initial position, and the valve plate 32 does not seal the valve bore 231, as shown by Fig. 4. When the two guide portions 33 move from the movement portion 261 to the positioning portion 262, the guide portions 33 are at the positioning position, while the valve plate 32 is fixed and in alignment with the valve bore 231. When the two guide portions 33 move from the positioning portion 262 to the sealing portion 263, the guide portions 33 are at the sealing position, while the valve plate 32 seals the valve bore 231, as shown by Fig. 7 and Fig. 8.

In addition, each combine seat 34 includes a plurality of assist wheels 50 slidably disposed at the guide seat 25, and the assist wheels 50 are adjacent to the two first sides 311 of the drive member 31, wherein the assist wheels 50 are disposed at two sides of the guide portion 33, respectively. Also, the central axis of the assist wheels 50 is vertical to the axial direction of the shaft 11, and the central axis of the guide portions 33 is vertical to the central axis of the assist wheels 50. The assist wheels 50 are parallel and slidably disposed at one side of the guide rail 26. When the shaft 11 drives the gate plate assembly 30 to reciprocate among the initial position, the positioning position, and the sealing position, the assist wheels 50 provide a lateral support. In case the embodiment is transversely placed to be operated, wherein the shaft 11 is axially parallel to the ground, the operation of the present invention is still facilitated. In an embodiment of the present invention, four assist wheels 50 are provided, wherein each combine seat 34 comprises two assist wheels 50, with the guide portion 33 disposed between the two assist wheels 50. Also, the drive member 31 includes a plurality of contact wheels 60. The central axis of the contact wheels 60 is vertical to the axial direction of the shaft 11, and the direction of the central axis of the contact wheels 60 is identical to the direction of the central axis of the two guide portions 33. Furthermore, a drive groove 321 is concavely disposed at the valve plate 32 in adjacent to the corresponding contact wheel 60. The drive groove 321 is provided with a depth variation in where the contact wheel 60 slides, wherein one section of the drive groove 321 is defined as a block section 3211, with the other section of the drive groove 321 defined as a bevel section 3212. The block section 3211 is disposed at the section toward the shaft 11, in other words, the block section 3211 is disposed in adjacent to the first end 201 of the valve body 20. The depth of the drive groove 321 gradually becomes shallower from the block section 3211 to the bevel section 3212.

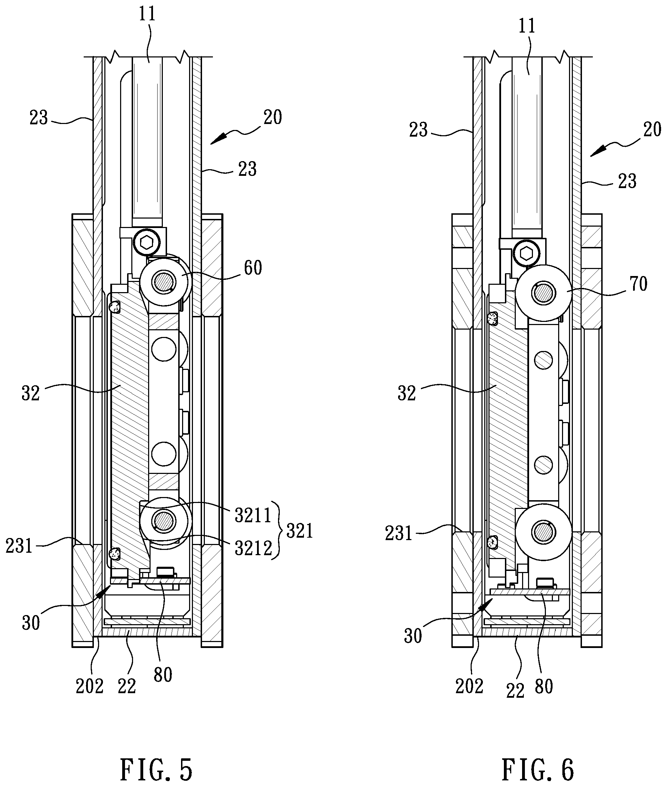

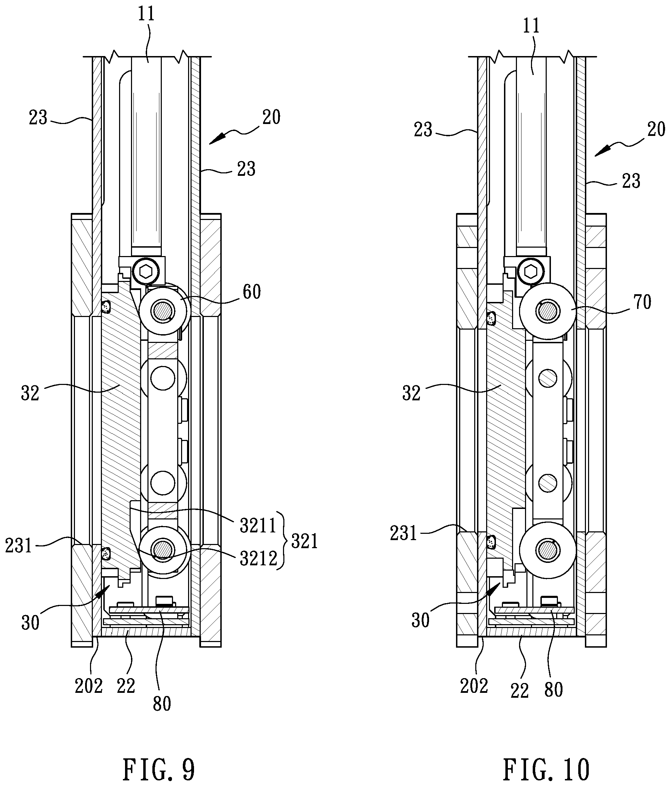

Therefore, when the shaft 11 drives the drive member 31 to reciprocate among the initial position, the positioning position, and the sealing position, the contact wheels 60 move between the block section 3211 and the bevel section 3212, such that the depth variation of the drive groove 321 causes the contact wheels 60 to push the valve plate 32 outward or retreat the valve plate 32 inward, as shown by Fig. 5 and Fig. 9. When the contact wheels 60 push the valve plate 32 outward, the two guide portions 33 move to the sealing portion 263 of the positioning portion 262, whereby the valve plate 32 is fixed and in alignment with the valve bore 231, as shown by Fig. 8 and Fig. 9.

Also, as shown by Fig. 7 to Fig. 10, the two second sides 312 of the drive member 31 are provided with a plurality of support wheels 70 that are slidably disposed between the valve plate 32 and the valve body 20. The support wheels 70 and the contact wheels 60 are disposed in axial alignment. Also, the size of the support wheels 70 is larger than the size of the contact wheels 60. Therefore, when the contact wheels 60 move from the block section 3211 to the bevel section 3212, a gap is produced between the contact wheels 60 and one of the side boards 23, such that the support wheels 70 provide a support force. Additionally, in an embodiment of the present invention, the amount of the contact wheels 60 is larger than the amount of the support wheels 70. The contact wheels 60 are provided in an amount of eight, and the contact wheels 60 are disposed at or in adjacent to the two first sides 311 and the two second sides 312, respectively. The support wheels 70 are provided in an amount of four.

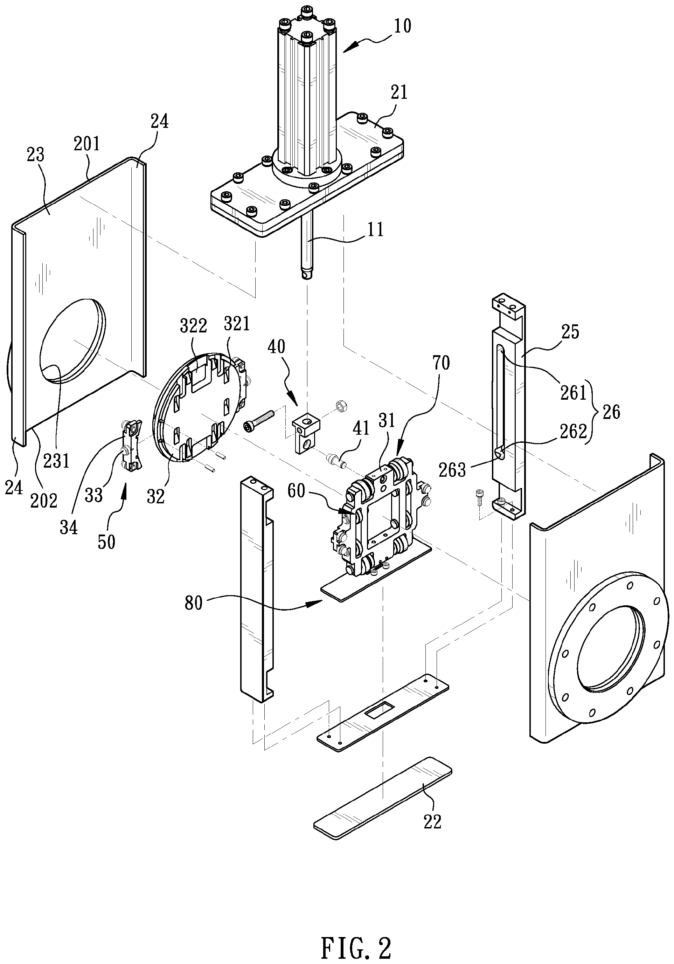

Also, as shown by Fig. 2, Fig. 3, Fig. 5, and Fig. 9, an adjust member 41 is movably disposed on the connection assembly 40 between the drive member 31 and the valve plate 32. A corresponding slide groove 322 is concavely disposed on the valve plate 32 in adjacent to the connection assembly 40, such that the adjust member 41 is slidably disposed in the slide groove 322. When the contact wheels 60 move from the bevel section 3212 to the block section 3211, the valve plate 32 retreats from the valve bore 231, and the shaft 11 drives the gate plate assembly 30 from the sealing position to the initial position. The adjust member 41 resists against one side of the slide groove 322, so as to drive the valve plate 32 to move.

Further, when the contact wheels 60 move between the block section 3211 and the bevel section 3212, the valve plate 32 is expanded toward or retreated away from the valve bore 231, wherein the adjust member 41 provides a movement allowance between the drive member 31 and the valve plate 32. In an embodiment of the present invention, the adjust member 41 is a pin.

A dust cover 80 is disposed at the second end 202 of the valve body 20 between the gate plate assembly 30 and the bottom board 22 and connected with one of the second side 312 of the drive member 31, so as to seal the gate plate assembly 30 between the two guide rails 26, as shown by Fig. 4. When the valve bore 231 opens, dust and dirt is prevented from entering the valve body 20 and affecting the operation of the gate plate assembly 30, as shown by Fig.4.

Referring to Fig. 4 to Fig. 10, when the valve bore 231 is to be sealed, the shaft 11 drives the gate plate assembly 30 to move from the initial position to the positioning position. The two guide portions 33 move from the movement portion 261 to the positioning portion 262 along the guide rail 26, such that the valve plate 32 is fixed and in alignment with the valve bore 231. Next, the drive member 31 continues to move along with the trip of the shaft 11, so that the gate plate assembly 30 moves from the positioning position to the sealing position. As a result, the contact wheels 60 slide from the block section 3211 of the drive groove 321 to the bevel section 3212 of the drive groove 321, forcing the valve plate 32 to move along the radial direction of the shaft 11. Therefore, the two guide portions 33 move from the positioning portion 262 to the sealing portion 263, and the valve plate 32 seals the valve bore 231.

On the other hand, when the valve bore 231 is to be opened, the shaft 11 drives the drive member 31 to move from the sealing portion to the initial position, and the contact wheels 60 slide from the bevel section 3212 of the drive groove 321 to the block section 3211 of the drive groove 321. The valve plate 32 stops sealing the valve bore 231. The two guide portions 33 leave the sealing portion 263 of the positioning portion 262. Meanwhile, the shaft 11 continues to drive the drive member 31 to move toward the initial position. The adjust member 41 resists against one side of the slide groove 322 and drives the valve plate 32 to move, whereby the gate plate assembly 30 is driven to move back to the initial position through the movement portion 261 of the guide rail 26.

Therefore, the guide rails 26 provide a guiding function during the movement of the gate plate assembly 30, such that the valve plate 32 is able to move to be in alignment with the valve bore 231. With the cooperation between the contact wheels 60 and the drive groove 321, the valve plate 32 is allowed to be expanded outward for sealing the valve bore 231. Also, during the expansion of the valve plate 32, the two guide portions 33 are positioned in the sealing portion 263, so as to keep the valve plate 32 to be fixed to be in alignment with the valve bore 231. Also, with the guide rails 26 and the depth variation of the drive groove 321, the valve plate 32 is retreated inward for opening the valve bore 231. Therefore, without the usage of spring, abnormal operation caused by resiliency fatigue of the spring is resolved.

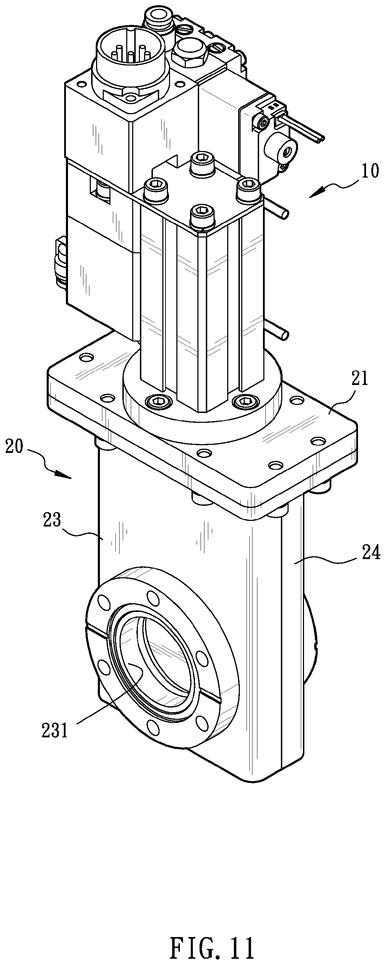

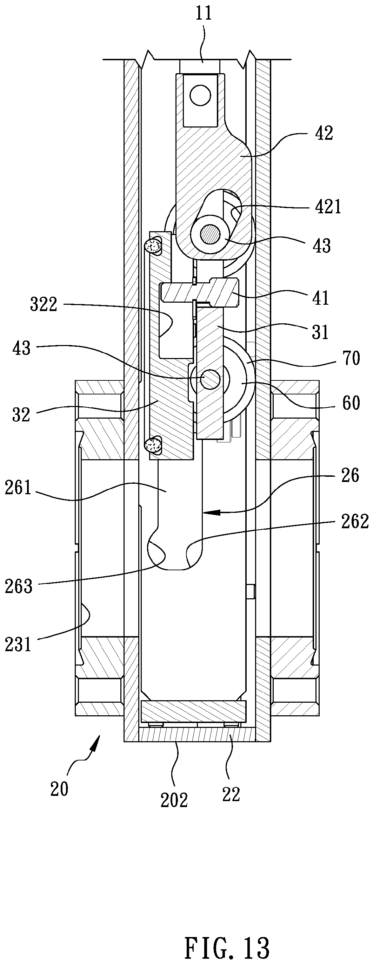

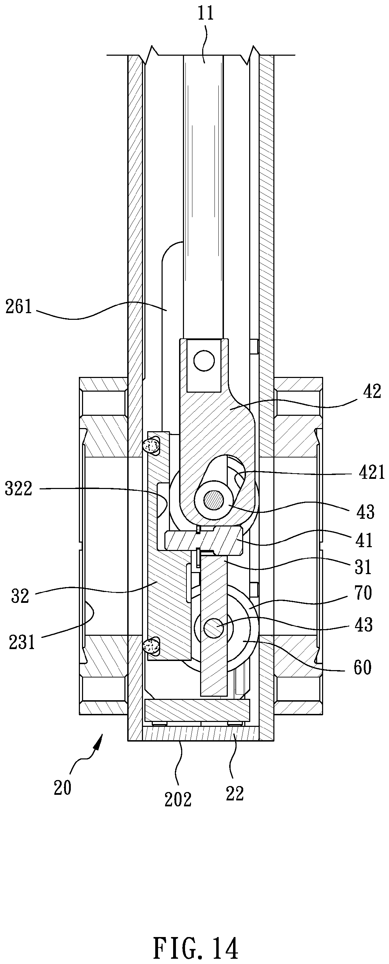

Referring to Fig. 11 to Fig. 14, a spring free gate valve in accordance with another embodiment of the present invention is disposed. For the clarity and briefness of the illustration, numeric for identical or similar components are saved. The difference between the embodiments are illustrated as following.

The two guide portions 33 are fastened to two sides of the valve plate 32, respectively. The two guide portions 33 are slidably disposed in the two guide rails 26. The guide portion 33 is allowed to be a sliding block, a roller, or a bearing. In the present embodiment, each guide portion 33 is disposed at a combine seat 34, and the two combine seats 34 are fastened to two sides of the valve plate 32, respectively, wherein the guide portions 33 are a bearing.

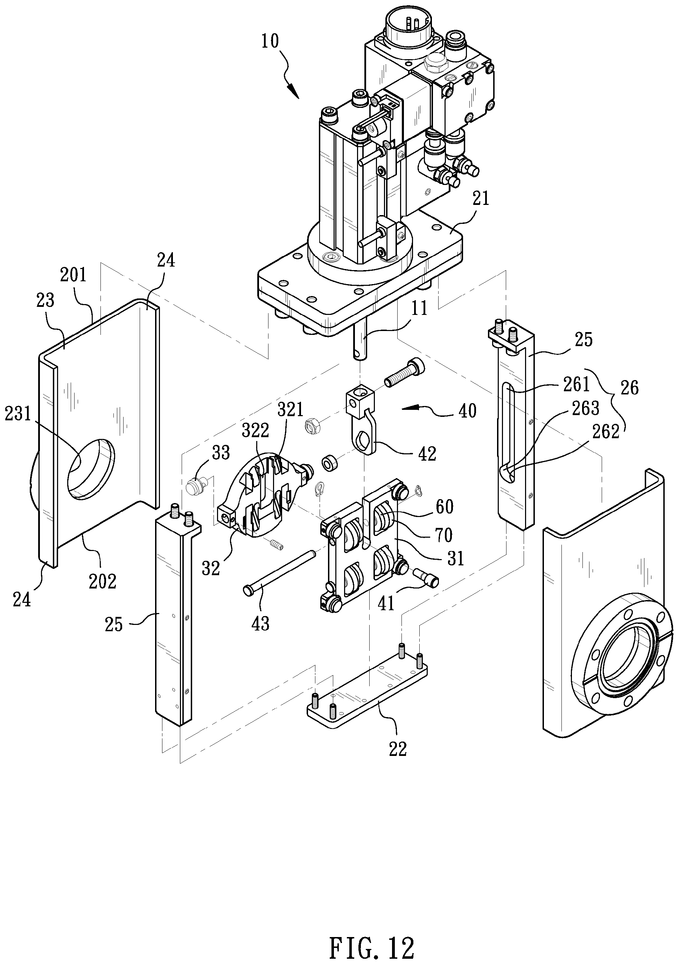

The connection assembly 40 further comprises a connection piece 42 and a linkage rod 43. The connection piece 42 has one end thereof connected with the shaft 11, and the other end thereof connected with the drive member 31 and the valve plate 32. The connection piece 42 is provided with an inclined bore 421, and the linkage rod 43 passes through the drive member 31 and the inclined bore 421 along a radial direction of the shaft 11, wherein the adjust member 41 is disposed in vertical to the linkage rod 43. In the present invention, two linkage rods 43 are provided. The linkage rods 43 are spaced and disposed in vertical to the shaft 11. Each linkage rod 43 is provided with two contact wheels 60 and two support wheels 70, as shown by Fig. 12.

When the power source 10 triggers the shaft 11 to operate, the connection piece 42 moves along the radial direction of the shaft 11, with the linkage rod 43 engaged with the inclined bore 421, so as to drive the drive member 31 to move along the axial direction of the shaft 11. When the connection piece 42 pushes the adjust member 41 to the bottom of the slide groove 322, the valve plate 32 is pushed to move, such that the valve plate 32 moves from the initial position to the positioning position and is in alignment with the valve bore 231. Subsequently, the shaft 11 continues to drive the drive member 31 to move, whereby the valve plate 32 moves from the positioning position to the sealing position for sealing the valve bore 231. Although particular embodiments of the invention have been described in detail for purposes of illustration, various modifications and enhancements may be made without departing from the spirit and scope of the invention. Accordingly, the invention is not to be limited except as by the appended claims.

## Claims

1. A spring free gate assembly, comprising:
a power source (10) provided with a shaft (11) capable of axially moving;
a hollow valve body (20), the power source (10) disposed at one end of the valve body (20) with the shaft (11) inserted into the valve body (20), the valve body (20) having one lateral face provided with a valve bore (231), two lateral sides within the valve body (20) provided with a guide rail (26), respectively;
a drive member (31) movably disposed in the valve body (20) and connected with an end of the shaft (11); and
a valve plate (32) disposed at the drive member (31), the valve plate (32) having two lateral sides provided with a guide portion (33), respectively, the two guide portions (33) slidably disposed at the two guide rails (26), the drive member (31) driving the two guide portions (33) of the valve plate (32) to move along the guide rails (26); when the two guide portions (33) move to one end of the two guide rails (26), the valve plate (32) is fixed and in alignment with the valve bore (231), and the drive member (31) continues to move along with a trip of the shaft (11), such that the valve plate (32) is driven to move along a radial direction of the shaft (11) to seal the valve bore (231).

2. The gate valve of claim 1, wherein each guide rail (26) includes a movement portion (261), a positioning portion (262), and a sealing portion (263); when the guide portions (33) move from the movement portion (261) to the positioning portion (262), the valve plate (32) moves along the radial direction of the shaft (11); when the guide portions (33) move to the positioning portion (262), the valve plate (32) is fixed and in alignment with the valve bore (231); when the guide portions (33) move from the positioning portion (262) to the sealing portion (263), the valve plate (32) moves along the radial direction of the shaft (11) to seal the valve bore (231) .

3. The gate valve of claim 1, further comprising an adjust member (41) movably passing through the valve plate (32) and the drive member (31).

4. The gate vale of claim 1, wherein the drive member (31) includes a plurality of contact wheels (60), a drive groove (321) concavely disposed at the valve plate (32) in adjacent to the corresponding contact wheel (60), respectively; each contact wheel (60) slides in the corresponding drive groove (321), wherein a depth of each drive groove (321) varies; when the contact wheels (60) slide to a shallow section of the drive grooves (321), the valve plate (32) moves along the radial direction of the shaft (11).

5. The gate vale of claim 4, wherein each drive groove (321) has one end thereof provided with a block section (3211) and the other end thereof provided with a bevel section (3212), the block section (3211) faces one end of the shaft (11), the depth of the drive groove (321) gradually being shallow from the block section (3211) to the bevel section (3212).

6. The gate vale of claim 4, wherein a plurality of support wheels (70) are disposed at two sides of the drive member (31) different from two sides in adjacent to the two guide portions (33), each support wheel (70) slidably disposed between the valve plate (32) and the valve body (20).

7. The gate vale of claim 6, wherein the support wheels (70) and the contact wheels (60) are disposed in axial alignment.

8. The gate vale of claim 2, further comprising a dust cover (80) disposed at one side of the valve body (20) away from the shaft (11) and connected at one end of the drive member (31), so as to seal the drive member (31) and the valve plate (32) between the two guide rails (26).

9. The gate vale of claim 1, further comprising a connection assembly (40) connecting the shaft (11), the drive member (31) and the valve plate (32), the connection assembly (40) including a connection piece (42) and a linkage rod (43); the connection piece (42) has one end thereof connected with the shaft (11) and the other end thereof connected with the drive member (31) and the valve plate (32); the connection piece (42) is provided with an inclined bore (421); the linkage rod (43) passes through the drive member (31) and the inclined bore (421).

10. The gate vale of claim 1, wherein two combine seats (34) corresponding to the two guide rails (26) are disposed at two sides of the valve plate (32), each combine seat (34) provided with a plurality of assist wheels (50), each assist wheel (50) slidably at one side of the corresponding guide rail (26), each assist wheels (50) disposed at two sides of the corresponding guide portion (33), respectively.

11. The gate vale of claim 10, wherein a direction of a central axis of the two guide portions (33) is vertical to a direction of a central axis of the assist wheels (50); the direction of the central axis of the assist wheels (50) is vertical to an axial direction of the shaft (11).

12. The gate vale of claim 10, wherein two sides of the valve body (20) are provided with a guide seat (25), respectively; the two guide rails (26) are disposed at the two guide seats (25), respectively; the assist wheels (50) are slidably disposed at the two guide seats (25), respectively.

13. The gate vale of claim 1, wherein the guide rails (26) are disposed in alignment with a driving direction of the shaft (11).
